# EUROPEAN PATENT SPECIFICATION

(11) **EP 3 855 928 B1**
(45) Date of publication and mention of the grant of the patent: **26.07.2023**
(21) Application number: 19772711.8
(22) Date of filing: 18.09.2019
(51) Int. Cl.: A23G 1/48, A23G 3/48, A23G 1/50, A23G 3/50, A23G 1/00, A23G 3/34

(54) **METHODS AND APPARATUS FOR MANUFACTURING CONFECTIONERY PIECES**
VERFAHREN UND VORRICHTUNG ZUR HERSTELLUNG VON SÜSSWAREN
PROCÉDÉS ET APPAREIL DE FABRICATION DE PIÈCES DE CONFISERIE

(30) Priority: 26.09.2018 GB 201815689
(43) Date of publication of application: 04.08.2021
(73) Proprietor: Kraft Foods Schweiz Holding GmbH, 6300 Zug (CH)
(72) Inventor: DINGLEY, Thomas James, Birmingham B30 2LU (GB); TWILLEY, Bethan, Birmingham B30 2LU (GB); GREWENIG, Heike, Birmingham B30 2LU (GB); CAMBIER, Eloise, Birmingham B30 2LU (GB); VALENTINAS, Ramunas, 51182 Kaunas (LT); ANDRIUSKEVICIUS, Dalius, 51182 Kaunas (LT)
(74) Representative: Wilson Gunn
(86) International application number: PCT/EP2019/075052
(87) International publication number: WO 2020/064471

(56) References cited:
- US-A1- 2007 104 828
- US-A1- 2010 136 165
- sand deng: "tablet chocolate breaking machine", Youtube, 28 December 2015 (2015-12-28), page 2 pp., XP054980036, Retrieved from the Internet: URL:https://www.youtube.com/watch?v=cmn_b6 3sxI8 [retrieved on 2019-12-10]

## Description

### Technical Field of the Invention

The present invention relates to methods of forming irregularly sized and/or shaped pieces of confectionery material, and apparatus for achieving the same. The present invention further relates to the use of a pin roller to form irregularly sized and/or shaped pieces of confectionery material.

### Background to the Invention

It is known to form confectionery products of substantially the same composition but of irregular size and/or shape, and to sell such an "assortment" of irregular pieces to a consumer together in a common packaging. When consuming such a product, the irregular shape and/or size of the pieces can enhance a consumer's experience of the product, for example by enhancing tactile sensation or mouthfeel, or by providing pieces which appear or feel less processed and more natural.

It is also commonly known to incorporate "inclusions" - such as nuts, crisp rice and dried fruit - into confectionery goods, such as chocolate bars or candy. Such inclusions can be used to enhance and/or alter the physical properties, visual appeal, taste, smell or mouthfeel of confectionery products, which may improve a consumer's experience.

Confectionery products, for example chocolate products, may consist of a plurality of irregularly-sized and/or shaped pieces (and may also contain inclusions), which may increase a consumer's enjoyment of them.

Known methods of producing irregularly-shaped confectionery pieces may involve cutting a slab of confectionery with a blade or forming individual irregularly-shaped pieces by deposition onto a surface, for example.

It would therefore be desirable to provide a more efficient or cost-effective method of manufacturing irregularly sized and/or shaped pieces of confectionery material. It would further be desirable to provide a more cost-effective or efficient method of manufacturing irregularly sized and/or shaped pieces of chocolate.

It would also be desirable to provide a method of manufacturing irregularly sized and/or shaped pieces of confectionery material (for example chocolate) which also have an uneven and/or rough surface(s) and/or have inclusions which are visible and/or exposed on at least part of the surface of the pieces.

It would also be desirable to provide a method of manufacturing irregularly sized and/or shaped pieces of confectionery material which gives a high level of irregularity between individual pieces.

US2010/136165 a method for forming layer confections having a dough-like confectionery material which contains a solid particulate, a liquid, and a diffusion controller. The dough-like confectionery material is used to laminate an edible centre using a compressive lamination assembly in which opposed rollers of a rotating assembly are provided with semi-cavities lined with dough-like confectionary material. When opposing semi-cavities come together, the final product of the edible core surround with the dough-like confectionary is formed without the need for a separate scoring station.

US2007/104828 discloses a center-filled confectionery product and a method for making the same. The center-filled confectionery product includes a fill portion which may be a liquid and an outer portion composed of a confectionery material. To form the product rotating drums rotate in contrary motion to bring forming members into cooperative registration with each other. The forming members are configured to mate thereby forming the shape of the final confectionery product when brought into cooperative engagement with each other. Rotation of drums crimps or otherwise squeezes opposing sides of outer portion into contact with each other to form a seal around inner portion prior to perforating or otherwise cutting to form sealed center-filled confectionery component.

https://www.youtube.com/watch?v=cmn_b63sxI8 discloses a tablet chocolate breaking machine. The tablet of chocolate is not a rope. From the video it can be seen, that there is a bladed member which is brought into contact with a slab to provide cut/shear pieces of chocolate. The interaction of the bladed roller and chocolate slab is not clearly disclosed. It can be seen that the pieces of chocolate are small and there is a waste of chocolate in the form of very small pieces that are to be considered as waste.

It is therefore an aim of embodiments of the invention to overcome or mitigate at least one problem of the prior art.

### Summary of the Invention

The present invention provides a method of manufacturing a plurality of irregularly shaped and/or sized pieces of confectionary material and an apparatus for the same according to the appended claims.

According to a first aspect of the present disclosure there is provided a method of manufacturing a plurality of irregularly shaped and/or sized pieces of confectionery material comprising the steps of;
a) forming at least one rope of confectionery material;
b) applying external pressure at multiple locations along the length of the at least one rope to substantially snap the at least one rope at multiple locations;
wherein step b) comprises applying the external pressure by means of at least one pin roller.

In all the embodiments below, only those comprising applying external pressure by means of at least one pin roll are considered to be part of the present invention.

All other embodiments are not part of the present invention.

The term "snap" (and therefore associated terms such as "snaps", "snapping", "snapped" etc.) is used herein to describe breakage of a piece of confectionery material in response to an applied pressure, resulting in fracture, snapping or cracking of the confectionery material, without any substantial "cutting" action. Whereas "cutting" requires a blade to travel all the way through the confectionery material, and results in uniform and regular edges of the cut, "snapping" need not require penetration through the material at all, or may penetrate the material partially before the pressure forces the material to break.

The term "snappable" is therefore used herein to describe the ability of a confectionery material to be "snapped" as defined hereinabove.

The confectionery material may comprise chocolate or candy, for example. In preferred embodiments the pieces comprise chocolate, which may be milk, dark, plain, white or compound chocolate. In some embodiments the chocolate is dark chocolate.

The method may comprise forming pieces with an individual thickness, or an average (mean) thickness, of no more than 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm or no more than 25 mm. The method may comprise forming pieces with an individual thickness, or an average (mean) thickness, of between 3 to 20 mm, such as between 5 to 20 mm, 5 to 16 mm, 5 to 13 mm or between 7 to 13 mm.

The "thickness" of a rope is defined herein as the dimension corresponding to the height of the rope, i.e. the distance between the base of the rope and a top surface (or part thereof) of the rope. Therefore, the thickness of a confectionery piece corresponds to the thickness of the section of the confectionery rope from which it was formed.

The method may comprise forming pieces with an individual weight, or an average (mean) weight, of no more than 3 g, 4 g, 5 g, 6 g, 7 g, 8 g, 9 g, 10 g, 11 g, 12 g, 13 g, 14 g or no more than 15 g. The method may comprise forming pieces with an individual weight, or an average (mean) weight, of between 1 to 20 g, such as between 3 to 15 g, or between 5 to 10 g.

The method may comprise forming pieces with an individual width, or an average (mean) width, of at least 20 mm, 25 mm, 30 mm, 35 mm, 40 mm, 45 mm, 50 mm, 60 mm or at least 75 mm. The method may comprise forming pieces with an individual width, or an average (mean) width, of between 15 to 75 mm, such as between 20 to 60 mm or between 20 to 50 mm.

The "width" of a rope is defined herein as the horizontal dimension perpendicular to the longitudinal axis (i.e. length) of the rope. Therefore, the width of a confectionery piece corresponds to the width of the section of the confectionery rope from which it was formed.

The confectionery material may comprise at least one inclusion. Suitable inclusions may comprise, for example, hazelnut (such as chopped hazelnut, whole hazelnut and/or crushed hazelnut), raisins, cranberry, cherry, candy pieces, chocolate pieces, biscuit pieces, cake pieces, corn (such as crushed corn and/or popcorn), caramel (such as salted caramel), almond (such as chopped almond, whole almond and/or crushed almond), crisp rice, apricot, any other type of nut, or dried fruit, or any combination thereof.

In some embodiments, the confectionery material may comprise at least 2, 3 or 4 types of inclusion. In preferred embodiments, the confectionery material comprises one or more of the following combinations of inclusion; salted caramel, chopped almond and crisp rice; chopped almond and apricot; chopped hazelnut, crushed corn and crisp rice; whole hazelnut, crushed corn and crisp rice.

The at least one inclusion may have an individual diameter, length or width, or an average (mean) diameter, length or width, of approximately no more than 1 mm, 2 mm, 3 mm, 4 mm, 5 mm, 6 mm, 7 mm, 8 mm, 9 mm, 10 mm, 15 mm or no more than 20 mm. The at least one inclusion may have an individual diameter, length or width, or an average (mean) diameter, length or width, of approximately between 1 to 20 mm, such as between 1 to 15 mm or between 1 to 10 mm.

The rope may be in the form of an elongate strip. The rope may be substantially rectangular, square, oval or circular in cross-section, for example, but is preferably in the form of an elongate strip having a rectangular cross-section therealong.

Step a) of the method may comprise the steps of;
1) manufacturing the confectionery material;
2) depositing the confectionery material onto a surface;
3) optionally further processing the confectionery material; and
4) forming the confectionery material into at least one rope

Step 1) may comprise commonly-used steps for manufacturing confectionery material. For example, where the at least one confectionery material comprises chocolate, common steps of chocolate manufacture such as conching, refining, pasting and/or tempering may be employed.

In some embodiments, the method may comprise the step of adding at least one inclusion to the confectionery material and mixing it to form a substantially homogeneous mixture of confectionery material and inclusion, i.e. where the at least one inclusion is evenly distributed in the confectionery material. In some embodiments, the at least one inclusion is added as part of step 1). In other embodiments, the at least one inclusion may be added after step 1). The at least one inclusion may be added after deposition of the confectionery material in step 2) but is preferably added before deposition of the confectionery material. In preferred embodiments, the at least one inclusion may be added to the confectionery material at a concentration of no more than 10% w/w, no more than 15% w/w, no more than 17% w/w, no more than 19% w/w, no more than 21% w/w, no more than 23% w/w, no more than 25% w/w, no more than 27% w/w, no more than 29% w/w, no more than 30% w/w, or no more than 35% w/w of the total mass of the confectionery material. In some embodiments, the confectionery material may comprise at least one inclusion present at a concentration of between 10 to 35% w/w of the total mass of the confectionery material, such as between 15 to 30% w/w, 15 to 25% w/w, 15 to 20% w/w, 18 to 27% w/w, 19 to 27% w/w, or between 20 to 25% w/w of the total mass of the confectionery material.

Inclusions may be added at a temperature of between 15 to 30 °C, such as between 20 to 25 °C, 22 to 24 °C, 22 to 23 °C, 23 to 24 °C or between 23.5 to 24 °C.

Deposition of the confectionery material in step 2) is preferably performed with the confectionery material in a substantially flowable state. The flowable confectionery material may be in a molten state. In such embodiments, step 2) may comprise depositing the confectionery material by means of a chute or hopper, for example. In preferred embodiments, the confectionery material is deposited by means of a moving chute or hopper. In such embodiments, the moving chute or hopper may ensure that the confectionery material is deposited evenly on the surface.

In embodiments where the confectionery material comprises chocolate, the temperature at which the chocolate is deposited in step 2) may be between 25 to 50°C, such as between 30 to 40 °C.

Step 2) may comprise depositing the confectionery material onto a transport system, such as a belt, belt system, movable belt system or conveyor system, for example. The confectionery material may be deposited onto the transport system while it is stationary. In such embodiments, the confectionery material may be allowed to disperse evenly before the transport system is actuated. In other embodiments, the confectionery material may be deposited onto the transport system while it is in motion. The transport system may comprise guide/guard rails, in order to ensure flowable or molten material is retained on the transport system

Step 3) may comprise the step of applying a forming roller to the confectionery material deposited on the surface. The forming roller may adjust the thickness of the confectionery material and/or the evenness/smoothness of the top surface of the confectionery material. In some embodiments, the forming roller may be mobile and may be rolled over the surface of the confectionery material. In preferred embodiments the confectionery material is moved along a transport system (such as a conveyor belt system) and is compressed by the forming roller as it runs underneath or past the forming roller. The position of the forming roller may be fixed or the forming roller may be movable.

In some embodiments, step 3) may comprise the step of cooling the confectionery material. The confectionery material may be cooled by any suitable cooling means, however, in preferred embodiments, the confectionery material is cooled in a cooling tunnel. In especially preferred embodiments, the confectionery material is transported through a cooling tunnel by means of a transport system. In such embodiments, the confectionery material may move through the cooling tunnel on a substantially linear path, or may move on a substantially curved, non-linear or winding path.

The confectionery material may be resident in the cooling tunnel for at least 10 minutes, 15 minutes, 25 minutes or at least 30 minutes.

The length of the cooling tunnel and/or the distance travelled of the confectionery material within the cooling tunnel may be at least 10 metres, at least 15 metres, at least 20 metres, at least 25 metres or at least 30 metres.

In some embodiments, the cooling tunnel may be at/ may be set at a temperature of no more than 15 °C, 16 °C, 17 °C, 18 °C, 19 °C or no more than 20 °C.

In some embodiments, step 3) may comprise cooling the confectionery material to no more than 20 °C, 21 °C, 22 °C, 23 °C, 24 °C, 25 °C, 26 °C, 27 °C, 28 °C, 29 °C or no more than 30 °C prior to step 4). In some embodiments, step 3) may comprise cooling the confectionery material to between 20 to 30 °C, such as between 22 to 28 °C, 23 to 27 °C, 23 to 25 °C, 23.5 to 27°C, 23.5 to 25 °C, 23.5 to 24 °C, 24 to 26 °C or 25 to 26 °C prior to step 4).

Cooling of the confectionery material after it is deposited may facilitate downstream processing and/or may allow for ease of and/or improved downstream processing. In preferred embodiments, the confectionery material is cooled to a desired temperature, which temperature may be selected so as to optimise the physical properties of the confectionery material, which may facilitate or improve the formation of the confectionery material into ropes and/or the subsequent snapping of the ropes under application of external pressure.

The confectionery material may have an average thickness of between 3 to 20 mm, such as between 5 to 20 mm, 5 to 16 mm, 5 to 13 mm or between 7 to 13 mm.

In some embodiments, step 4) comprises forming the confectionery material into at least one rope with a rope former. The rope former may comprise a system comprising one or more chutes or channels along which the confectionery material passes. The confectionery material will be formed into ropes as it travels along the channels. The rope former may comprise at least one opening (i.e. a single opening or a series of openings) or at least one channel through which the confectionery material passes and/or flows. In preferred embodiments, the confectionery material is passed through the rope former by means of a transport system. In embodiments where more than one rope is formed from the confectionery material, the openings may be arranged to allow formation of substantially discrete ropes of confectionery material. The openings may be evenly spaced or unevenly spaced.

The size and/or shape of the at least one opening of the rope former may be adjusted to achieve the desired rope size/shape/characteristics, and the temperature of the confectionery material may be adjusted (for example by controlling the temperature of steps involved in the production of the confectionery material) to achieve the same. For example, the temperature of the confectionery material may be set so that the at least one rope flows/splays outwardly a desired amount immediately after exiting the at least one opening of the rope former. In such embodiments, such subsequent outward flowing/splaying of the ropes may result in a more irregular shape and/size of the at least one rope and therefore of the final product pieces.

In some embodiments, the confectionery material is deposited as a rope, and so the confectionery material may not need any further processing to form it into a single rope. In some embodiments, the confectionery material may be deposited into at least one channel with the correct dimensions to form the confectionery material into at least one rope immediately after deposition. The or each channel may comprise its own transport system and/or downstream processing apparatus (for example cooling tunnel, rope former, static knives, rotary knives) as described herein.

In other embodiments, the confectionery material is substantially cut into at least one rope. The confectionery material may be cut with at least one knife or blade.

The at least one knife or blade may be a static knife or blade, or a rotary knife or blade. In some embodiments, a combination of at least one static knife or blade and at least one rotary knife or blade may be used.

In some embodiments, at least one knife or blade is moved through the confectionery material to effect cutting.

In preferred embodiments, the confectionery material is run on a transport system through the path of at least one row of knives to effect cutting. A "row" of knives may comprise one knife or a plurality of knives.

In some embodiments, the confectionery material is transported through the path of at least one row of knives. Each knife within the or each row of knives (where the row comprises more than two knives) may be equidistant or the knives may be at varying distances from each other. Each knife of the at least one row of knives may be at least 20 mm, 25 mm, 30 mm, 35 mm, 40 mm, 45 mm, 50 mm, 60 mm or at least 75 mm away from an adjacent knife. Each knife of the at least one row of knives may be between 15 to 60 mm, such as between 20 to 50 mm away from an adjacent knife.

Embodiments where the knives are at varying distances from each other may result in higher levels of irregularity in size and/or shape of the ropes and/or of the final product pieces.

In some embodiments, the confectionery material may be transported through a series of at least two rows of knives. In such embodiments, the at least one knife of a particular row of knives may or may not line up or be in register with those of previous or subsequent rows of knives. In embodiments where the two rows of knives line up, this may ensure that the ropes are cleanly cut/formed.

The method may comprise forming at least one rope with an individual thickness or height, or an average (mean) thickness or height, of no more than 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm or no more than 25 mm. The method may comprise forming at least one rope with an individual thickness or height, or an average (mean) thickness or height, of between 3 to 20 mm, such as between 5 to 20 mm, 5 to 16 mm, 5 to 15 mm or between 5 to 13 mm.

The method may comprise forming at least one rope with an individual width, or an average (mean) width, of at least 20 mm, 25 mm, 30 mm, 35 mm, 40 mm, 45 mm, 50 mm, 60 mm or at least 75 mm. The method may comprise forming at least one rope with an individual width, or an average (mean) width, of between 15 to 60 mm, such as between 20 to 50 mm.

In some embodiments the rope comprises a polygonal, circular or oval cross-section. In preferred embodiments the rope comprises a rectangular cross-section with a width greater than its height.

The at least one rope of confectionery material may be substantially snapped at each location under application of external pressure without any substantial cutting action.

The method may comprise forming at least 2, 3, 4, 5, 6, 7, 8, 9, 10, 15, 20, 25 or at least 30 ropes.

The confectionery material may comprise inherent points or lines of weakness and the snapping action may occur or start at said points or lines. Points or lines of weakness may include fracture lines or areas surrounding any inclusions within the confectionery material, for example.

The at least one rope of confectionery material may be substantially snapped at each location under application of external pressure by any suitable means of applying external pressure. The external pressure comprises applying external pressure by means of at least one pin roller.

In some embodiments, the at least one rope may be substantially snapped at each location at which external pressure is applied. Step b) may comprise applying external pressure at multiple locations along the length of the at least one rope to substantially snap the at least one rope at each location.

In other embodiments the rope may be snapped at a location upstream or downstream of the location at which pressure is applied, preferably upstream. In such embodiments pressure may be applied at one location which causes bending at a location upstream or downstream thereof, resulting in snapping at the bending location.

In some embodiments, external pressure is applied to at least two locations of the at least one rope substantially simultaneously. In other embodiments external pressure is applied to at least two locations of the at least one rope substantially asynchronously, for example in sequence along the length of the at least one rope.

In some embodiments, (only those comprising applying external pressure by means of at least one pin roll are considered to be part of the present invention, all other embodiments are not part of the present invention) a single piston, press, protrusion of a pin roller, or other device, may apply pressure at multiple locations along the length of a rope, for example by transporting the rope along a transport system underneath a stationary piston, press, protrusion of a pin roller, or other device, or by moving the piston, press, protrusion of a pin roller, or other device, along the rope.

In some embodiments the at least one rope may be snapped by application of pressure upstream or downstream of the location of the snap (due to bending of the rope), and also be snapped at the location at which pressure is applied. In such embodiments, the two types of snapping may be effected by the same piston/press, pin roller or other device or may be effected by different pistons/presses, pin rollers or other devices. The two types of snapping may occur simultaneously or in sequence. In preferred embodiments, the at least one rope is snapped by bending upstream of the location at which pressure is applied and the resulting snapped-off portion is subsequently snapped at multiple locations along its length by application of pressure at each location, which may be effected by the same piston/press, pin roller or other device and/or by one or more further downstream pistons/presses, pin rollers, or other devices.

In some embodiments, not part of the present invention, the external pressure may be applied by a piston or press.
In such embodiments, the at least one piston or press may be actuated to come down on the top surface of the at least one rope and substantially snap the at least one rope substantially at the point of contact between the or each piston or press and the rope.

In some embodiments, at least one piston or press may be located over a specific point(s) of the at least one rope and subsequently actuated to effect snapping of the at least one rope. In some embodiments, a grid or series of pistons or presses may be located over the at least one rope and may be arranged to actuate simultaneously or asynchronously. In other embodiments, at least one piston or press may be moved along the length of at least one rope and actuated at desired time intervals. In such embodiments, the at least one piston or press may be actuated at regular or irregular intervals.

In preferred embodiments, the at least one rope may be positioned underneath at least one piston or press by means of a transport system (such as a conveyor belt system). In such embodiments, the at least one piston or press may be arranged to actuate at desired time intervals as the at least one rope is moved along underneath it or them by the transport system. In such embodiments, the at least one piston or press may be arranged to actuate at regular (such as, for example, once every 0.5 seconds, 1 second, 2 seconds, 3 seconds, 4 seconds or once every 5 seconds) or irregular intervals. Actuation of the at least one piston or press at irregular time intervals may increase irregularity in the final product pieces. The at least one rope may be arranged to move continuously underneath the at least one piston or press, or may be arranged to move along between at least one piston or press "station", at which it is substantially stationary.

In embodiments wherein more than one rope is formed from the confectionery material, at least one piston or press may be aligned with each rope. In such embodiments, pistons or presses located over different ropes may be arranged to actuate simultaneously or asynchronously and/or may be arranged to actuate at the same or different time intervals. In some embodiments, the at least one rope may be moved, on a transport system, underneath a grid or series of pistons or presses which may be arranged to actuate simultaneously or asynchronously.

Each individual piston or press may have a cylindrical shape, a rectangular shape, an oblong shape, or any other regular or irregular prism shape. Each individual piston or press may taper inwardly or outwardly. Each individual piston or press may be cone shaped. Each individual piston or press may have a circular, square, rectangular, pentagonal, hexagonal cross-section, or any other regular polygon-shaped or irregular polygon-shaped cross-section.

Each individual piston or press may have a substantially rounded shape, such as a dome shape or hemi-spherical shape.

The width of each individual piston or press may be more than 30%, 35%, 40%, 45%, 50%, 55%, 60%, 65%, 70%, 75%, 80%, 85%, 90% or more than 95% of the width of a rope. The width of each individual piston or press may be up to 100% of the width of a rope.

The width of each individual piston or press may be no more than 30%, 35%, 40%, 45%, 50%, 55%, 60%, 65%, 70%, 75%, 80%, 85%, 90% or no more than 95% of the width of a rope.

A wider piston or press may be advantageous over a thinner piston or press as it may result in a cleaner snap of a rope. A thinner piston or press may be advantageous over a wider piston or press as it may result in a more irregular/unpredictable snap of a rope.

The distal end or contact surface (the part which makes contact with the rope) of each individual piston or press may contact at least 5 mm, 6 mm, 7 mm, 8 mm, 9 mm, 10 mm, 12 mm, 14 mm, 16 mm, 18 mm, or at least 20 mm of the length of a rope. The distal end or contact surface of each individual piston or press may contact no more than 30 mm, 25 mm, 20 mm or no more than 15 mm of the length of a rope. The distal end or contact surface of each individual piston or press may contact between 1 mm to 30 mm, such as between 1 mm to 25 mm, 1 to 20 mm, 2 mm to 20 mm, 3 mm to 20 mm, 4 mm to 20 mm, 5 mm to 20 mm, 5 mm to 15 mm, 5 mm to 12 mm, 7 mm to 12 mm or between 8 to 12 mm of the length of a rope.

When contacting a rope and applying external pressure thereon, in preferred embodiments each individual piston or press may penetrate no more than 5%, 10%, 15%, 20%, 25%, 30%, 35%, 40%, 45%, or no more than 50% through the thickness of the rope. In especially preferred embodiments, each individual piston or press may penetrate less than 10% through the thickness of the rope. It may be advantageous for a piston or press to penetrate less through the confectionery material, as this may avoid undesirable visible dents, scuffs or marks on the final product pieces. It may be advantageous for a piston or press to penetrate further through the confectionery material, as this may result in a cleaner snap.

According to the present invention, the external pressure is applied by at least one pin roller. The at least one pin roller may comprise a central cylindrical shaft. The pin roller may comprise at least one set of protrusions located around the circumference of the roller. The protrusions may act as pistons or presses when rotated onto the rope or ropes of confectionery material. The or each set of protrusions may comprise a single protrusion or a plurality of protrusions. The or each set of protrusions may comprise a set of protrusions located annularly (i.e. in the form of a ring) around the circumference of the pin roller. Each set of protrusions may be arranged to line up with a different rope of confectionery material.

The at least one pin roller may rotate about an axis parallel with the width of the confectionery material and of the at least one rope. In preferred embodiments, the at least one pin roller rotates such that its protrusions apply external pressure to at least one rope whenever the rotation of the roller brings a protrusion into contact with the at least one rope.

In embodiments where there is more than one rope, a pin roller may be located over a single rope, or at least two ropes may share a common roller (and the common roller may therefore have one set/ring of protrusions located over each rope).

In preferred embodiments, the at least one rope is transported on a transport system (such as a conveyor belt system) into the path of the at least one pin roller, whereby it is substantially snapped by the protrusions of the pin roller as it moves past. In such embodiments, the at least one pin roller may be arranged to rotate at a desired speed, or the at least one pin roller may be arranged to rotate in response to force applied to it resulting from the movement of the at least one rope on the transport system.

The spacing between sets of protrusions may be adjusted such that each ring/set of protrusions lines up with the location and/or spacing of the or each rope, in order to ensure efficient snapping of the or each rope by the protrusions. The at least one ring/set of protrusions may align with the or each rope.

The spacing between individual protrusions of a ring/set of protrusions may be adjusted so as to alter the spacing between snapping locations on a rope with which said ring/set of protrusions is aligned, which will therefore alter the distance between snaps and so will alter the size and/or shape of the final product pieces and hence alter irregularity of the pieces. The individual protrusions of a set/ring of protrusions may be evenly spaced around the circumference of the roller, or unevenly spaced around the circumference of the roller. In embodiments where there is more than one rope and there is one set/ring of protrusions lined up with each rope (each set/ring being on a common roller or on different rollers), the spacing between individual protrusions within a set/ring may be consistent between at least two sets/rings or may be inconsistent between at least two sets/rings. In embodiments where the spacing between individual protrusions within a set/ring of protrusions is inconsistent between at least two sets/rings, the ropes with which each set/ring is aligned may be snapped at different locations and therefore each of said ropes may be snapped into differently sized/shaped pieces, thus increasing irregularity of the final product pieces.

Each individual protrusion may have a cylindrical shape, a rectangular shape, an oblong shape, or any other regular or irregular prism shape. Each individual protrusion may taper inwardly or outwardly. Each individual protrusion may be cone shaped. Each individual protrusion may have a circular, square, rectangular, pentagonal, hexagonal cross-section, or any other regular polygon-shaped or irregular polygon-shaped cross-section.

Each individual protrusion may have a substantially rounded shaped, such as a dome shape or hemi-spherical shape.

The width of each individual protrusion may be more than 30%, 35%, 40%, 45%, 50%, 55%, 60%, 65%, 70%, 75%, 80%, 85%, 90% or more than 95% of the width of a rope. The width of each individual protrusion may be up to 100% of the width of a rope.

The width of each individual protrusion may be no more than 30%, 35%, 40%, 45%, 50%, 55%, 60%, 65%, 70%, 75%, 80%, 85%, 90% or no more than 95% of the width of a rope

A wider protrusion may be advantageous over a thinner protrusion as it may result in a cleaner snap of a rope. A thinner protrusion may be advantageous over a wider protrusion as it may result in a more irregular/unpredictable snap of a rope.

The distal end or contact surface (the part which makes contact with the rope) of each individual protrusion may have a thickness (the dimension perpendicular with the width of the protrusion and the width of the ropes as described above, and parallel with the length of the ropes) of at least 5 mm, 6 mm, 7 mm, 8 mm, 9 mm, 10 mm, 12 mm, 14 mm, 16 mm, 18 mm, or at least 20 mm. The distal end or contact surface of each individual protrusion may have a thickness of no more than 30 mm, 25 mm, 20 mm or no more than 15 mm. The distal end or contact surface of each individual protrusion may have a thickness of between 5 mm to 30 mm, such as between 5 mm to 25 mm or between 5 to 20 mm.

When contacting a rope and applying external pressure thereon, each individual protrusion may penetrate no more than 5%, 10%, 15%, 20%, 25%, 30%, 35%, 40%, 45% or no more than 50% through the thickness of the rope. It may be advantageous for a protrusion to penetrate less through the confectionery material, or not at all, as this may avoid undesirable visible dents, scuffs or marks on the final product pieces. It may be advantageous for a protrusion to penetrate further through the confectionery material, as this may result in a cleaner snap.

The applied pressure may comprise an applied force of at least 30 N, 35 N, 40 N, 45 N, 50 N, 55 N or 60 N and/or no more than 60 N, 55 N, 50 N, 45 N, 40 N, 35 N or 30 N. The applied pressure may comprise an applied force of between 30 to 60 N, such as between 40 to 50 N, or 45 to 50 N.

In some embodiments, the method may comprise applying external pressure (by means of a piston, press, pin roller or any other suitable device) to the at least one rope in order to substantially snap the at least one rope upstream of the location at which the external pressure is applied. The method may comprise applying external pressure to the at least one rope to substantially bend the rope upstream of the application of external pressure in order to effect snapping.

In preferred embodiments, the majority of the rope is resting on and supported by a surface and a portion extends beyond the end of the surface such that this portion is not supported by the surface, and the method comprises applying external pressure to the unsupported portion. The unsupported portion may be pushed downwards to below the plane of the surface which creates a bend in the rope upstream (i.e. at a position located over the surface) of the location of the application of external pressure, and eventually the bend becomes too great for the rope to sustain such that the rope snaps substantially at the location of the bend.

It is believed that applying pressure to an unsupported portion of a rope allows the rope to be snapped more easily and/or effectively.

The method may comprise running the at least one rope over the end of a transport system, such as a moving belt, and applying external pressure to an unsupported portion as and/or after it runs over the end. In this way, an unsupported portion of rope can be continually formed due to the rope being continually transported over the end of the transport system. The external pressure may be applied by at least one piston, press, pin roller, or other suitable device, positioned immediately downstream of the end of the transport system. The at least one piston, press, pin roller, or other suitable device, may be arranged to press the unsupported portion of the at least one rope down to below the level of the surface of the transport system.

In especially preferred embodiments, the method comprises using a transport system comprising a first section located upstream of and at a greater height than a second section. The at least one piston, press, pin roller, or other suitable device, may be arranged to press the unsupported portion of the at least one rope down to below the level of the surface of the first section of the transport system. In such embodiments, the downstream portion of rope which has been formed by the upstream snapping of the rope (the "snapped portion") may fall onto or at least partially come to rest on the second section of the transport system.

The snapped portion of the rope may subsequently be snapped into smaller pieces at multiple locations along its length. The snapped portion of the rope may subsequently be snapped into smaller pieces as it moves along and/or between the first and second sections of the transport system through the path of the piston, press, pin roller or other suitable device which applied the external pressure which caused the bending and upstream snapping of the rope. The snapped portion may alternatively or additionally be snapped into smaller pieces by at least one piston, press, pin roller, or other suitable device, located downstream of the device that was used to apply pressure to effect upstream snapping.

Further snapping the snapped portion of the rope may be desirable and/or advantageous as the snapped portion may be considerably longer than the desired product pieces, for example where the snap occurs a considerable way upstream of the application of external pressure, thus forming a relatively long snapped portion.

In embodiments comprising a transport system, the transport system may comprise more than one section. In such embodiments, there may be a gap between adjacent sections. The at least one rope and/or product pieces may be arranged to run over the at least one gap of the transport system. Such gaps may be advantageous as they may allow small parts/bits and/or dust to fall through them as the at least one rope and/or product pieces run over them, while being small enough so that the at least one rope and/or product pieces do not fall through, thus allowing small parts/bits and/or dust to be separated from the final product.

It is to be appreciated that the temperature of the confectionery material at each stage in the method will have an effect on the ability of the material to be formed into ropes (by cutting, using a roper former, or otherwise) and on the ability of the ropes to be snapped (by pistons, presses, pin rollers or otherwise), and may be adjusted accordingly. For example, a confectionery material which is too solid may be difficult to cut with static knives, and ropes that are too soft may not be brittle enough to snap effectively.

The at least one rope may be substantially solid prior to step b). The at least one rope may be sufficiently brittle to allow or facilitate snapping. The temperature of the at least one rope may be adjusted prior to step b). In some embodiments, the at least one rope may be cooled (for example in a cooling tunnel) prior to step b). In some embodiments, the confectionery material is chocolate and the at least one rope is cooled prior to step b) to a temperature of no more than 27 °C, 26 °C, 25 °C, 24 °C, 23 °C, 22 °C, 21 °C or 20 °C. Adjusting the solidity/brittleness of a rope may be advantageous, as it may allow or facilitate the subsequent snapping step and/or control or alter the snapping characteristics of the rope upon application of external pressure.

In some embodiments, the temperature of the confectionery material is adjusted/controlled before step a) and the temperature of the at least one rope is adjusted/controlled after step a) but before step b). In preferred embodiments, the confectionery material is cooled to a desired temperature before step a), and the at least one rope is further cooled before step b). Such embodiments may be advantageous as the temperature of the confectionery material may be adjusted to facilitate and or improve rope formation (for example by keeping the material at a high enough temperature to improve or facilitate rope formation by cutting with static knives), and the temperature of the at least one rope may be adjusted to facilitate snapping under application of external pressure (i.e. making the at least one rope cool enough so as to be sufficiently solid/brittle to snap when external pressure is applied).

It is also to be appreciated that the level (% w/w) and type of any inclusions may have an effect on the downstream processing of the confectionery material, and may be adjusted accordingly. For example, in embodiments comprising raisins as an inclusion, raisins may substantially "bridge" two pieces of confectionery material which have been snapped under application of external pressure, as raisins are not particularly snappable. In such embodiments, it may be necessary to pull such pieces apart, or they may come apart during packaging or distribution.

The irregular pieces of the disclosure may have irregularity in shape and/or size resulting from one or more (and preferably all) of; a bumpy surface due to the inclusions or due to uneven distribution of confectionery material; rough, irregular edges formed by splaying out of the ropes after going through the rope former; rough, irregular edges formed due to the inherent irregularity in the snaps along the rope.

The the method may comprise removing pieces and/or debris of confectionery material which become stuck to at least one pin roller. In such embodiments, the method may comprise removing the pieces and/or debris with a pin roller debris removal system. The debris removal system may comprise a scraping system. The scraping system may comprise a scraping arrangement comprising one or more scraping members arranged to remove debris and/or pieces of confectionery material which may become stuck to a pin roller, such as by substantially "scraping" the debris and/or pieces off the pin roller. The scraping arrangement may comprise a series of scraping members arranged along an axis parallel to at least one pin roller, such as a series of scraping members operably connected to a central shaft which runs parallel to the central shaft of the at least one pin roller.

The at least one scraping member may comprise a body and a flange or protrusion. The body of the at least one scraping member may be arranged to come into close proximity with the tip of the protrusions of a pin roller. The flange of the at least one scraping member may be arranged to fit into the space formed to the side of a set of protrusions and/or between sets of protrusions (such as annular sets of protrusions arranged around the circumference of a central shaft of a pin roller), and/or the distal end of a flange may be arranged to come into close proximity with the central shaft of the pin roller, such as a central cylindrical shaft. The flange of the at least one scraping member may be arranged such that the side or sides of the flange is/are in close proximity with the side or sides of at least one protrusion.

There may be a gap between the body of at least one scraping member and the tip of the protrusions of a pin roller when they are at their closest point to the body, a gap between the distal end of at least one flange and the central shaft of a pin roller, and/or a gap between at least one side (such as both sides) of at least one flange and the side(s) of adjacent protrusions as they move past the scraping member. Said gap(s) may be at least 0.1 mm, 0.2 mm, 0.3 mm, 0.4 mm, 0.5 mm, 1 mm, 1.5 mm, 2 mm, 3 mm, 4 mm, 5 mm, 10 mm, 15 mm or 20 mm and/or no more than 0.1 mm, 0.2 mm, 0.3 mm, 0.4 mm, 0.5 mm, 1 mm, 1.5 mm, 2 mm, 3 mm, 4 mm, 5 mm, 10 mm, 15 mm or 20 mm. In other embodiments, the part or parts of at least one scraping member may substantially contact the part or parts of the at least one pin roller and corresponding central shaft and/or protrusion(s).

A scraping system/arrangement as described above allows debris and/or pieces of confectionery material which become stuck to a pin roller after it has applied pressure to at least one rope to be substantially removed from the pin roller, as the debris and/or pieces are carried up into the scraping member(s), wherein any pieces which are big enough (this depends on the gap left between the parts of the scraping member and the parts of the pin roller) will come into contact with the scraping member, which will at least partially block the debris or pieces from travelling any further upwards on the pin roller (i.e. being carried upwards by the rotation of the pin roller) and substantially or at least partially remove or "scrape" the debris and/or pieces off the pin roller.

This may be advantageous as it allows the pin roller to be kept substantially free of any substantial pieces of confectionery material which may become stuck to it, and allows at least a portion of any smaller pieces or debris of confectionery material which may become stuck to it to be removed. This may be advantageous as it may stop confectionery material building up on the end of the pin roller protrusions and/or between the protrusions and/or to the side of the protrusions, which may help the pin roller to more efficiently snap and/or apply pressure to ropes of confectionery material over more than one revolution of the pin roller.

According to a second aspect of the disclosure, there is provided an apparatus for manufacturing a plurality of irregularly shaped and/or sized pieces of confectionery material comprising;
a device or mechanism for forming at least one rope of confectionery material;
a device or mechanism for applying external pressure to multiple locations along the length of the at least one rope to substantially snap the at least one rope at multiple locations; wherein the device or mechanism for applying the external pressure comprises a pin roller.

The confectionery material and pieces may be as described hereinabove for the first aspect of the disclosure.

The device or mechanism for forming at least one rope may comprise a rope former or a knife arrangement as described hereinabove for the first aspect of the disclosure.

The apparatus may further comprise a pin roller debris removal system as described in relation to the method of the first aspect of the disclosure, such as a scraping system.

The device or mechanism for applying external pressure comprises applying the external pressure by means of at least one pin roller as described hereinabove for the first aspect of the disclosure.

The apparatus may comprise any feature mentioned hereinabove in relation to the method of the first aspect of the disclosure, alone or in combination.

According to a third aspect of the disclosure there is provided a method of snapping a piece of confectionery material comprising the step of;
applying external pressure to at least one location of a piece of confectionery material to substantially snap the piece at the or each location.

The confectionery material may be as described hereinabove for the first aspect of the disclosure.

The method may further comprise the step of forming the confectionery material into at least one rope. The ropes may be formed by any method, or may have dimensions, as described hereinabove for the first aspect of the disclosure.

The external pressure and device or mechanism for applying the external pressure comprises applying the external pressure by means of at least one pin roller.

According to a third aspect of the disclosure there is provided use of a pin roller to substantially snap a piece of confectionery material into a plurality of pieces.

The pin roller and confectionery material may be as described hereinabove for the first aspect of the disclosure, and the confectionery material is preferably chocolate.

### Detailed Description of the Invention

In order that the invention may be more clearly understood one or more embodiments thereof will now be described, by way of example only, with reference to the accompanying drawings, of which:
- Figure 1: is an image showing a chute depositing a confectionery material, as part of an embodiment of a method and apparatus of the invention
- Figure 2: is an image showing a row of static knives for use in an embodiment of a method and apparatus of the invention.
- Figure 3: is an image showing a pin roller for use in embodiments of the methods and apparatus of the invention.
- Figure 4: is a photograph showing a pin roller in use in an embodiment of the method and apparatus of the invention.
- Figure 5: is a photograph showing a belt system gap arrangement in use in embodiments of the method and apparatus of the invention.
- Figure 6: is a photograph showing a piece of chocolate with inclusions obtained by an embodiment of the method of the invention described in Example 1.
- Figure 7: is a photograph showing a plurality of irregularly shaped and/or sized pieces of chocolate with inclusions obtained by the embodiment of the method of the invention described in Example 1.
- Figure 8: is a photograph showing a side view of a rope of confectionery material with inclusions for use in another embodiment of the method of the invention, as described in Example 2.
- Figure 9: is a photograph showing a plurality of irregularly shaped and/or sized pieces of chocolate with inclusions obtained by the method of Example 2.
- Figure 10: is a photograph showing a perspective view of ropes of confectionery material with inclusions for use in yet another embodiment of the method of the invention, described in Example 3.
- Figure 11: is a photograph showing a side view of a piece of confectionery material with inclusions obtained by the embodiment of the method of the invention described in Example 3.
- Figure 12: is a photograph showing a plurality of irregularly shaped and/or sized pieces of chocolate with inclusions obtained by the method of Example 3.
- Figures 13a-d: illustrate an embodiment of step b) of the method of the invention, comprising a "step down" transport system.
- Figures 14a-b: illustrate an embodiment of a pin roller debris removal system of the invention.

### Examples

### Materials and methods

### Confectionery material

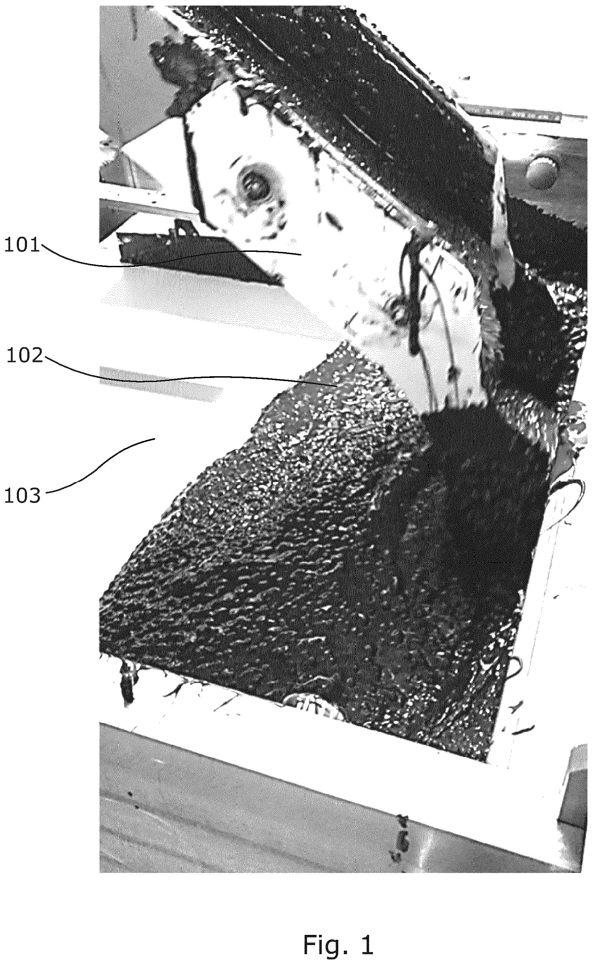

Referring to Figure 1, a dark chocolate composition 102 was used as the confectionery material, with suitable inclusions added and mixed in before deposition onto a surface. The confectionery material was formed into a chocolate sheet with inclusions located therein, as described below.

### Apparatus

The apparatus included a moving chute 101, belts 103 and 104 of a transport system in the form of a movable belt system, a cooling tunnel (not shown), a set of knives in the form of static knives 201, a pin roller 301 or 401 and a belt system gap arrangement 501; all as shown in Figures 1 to 5.

### Deposition

The chocolate 102 was deposited in a flowable state using a moving chute 101 as shown in Figure 1. Referring to Figure 1, the chocolate 102 was deposited onto a movable belt 103 (stationary until actuated) of the belt system, by a chute 101, which moved from side to side during deposition to ensure even deposition of chocolate, onto the belt, forming a relatively uniform sheet (which had an uneven top surface due to inclusion protrusion).

### Cooling of the confectionery material

The chocolate was transported by the belt system through a cooling tunnel (not shown), prior to rope formation.

### Formation of ropes from the confectionery material

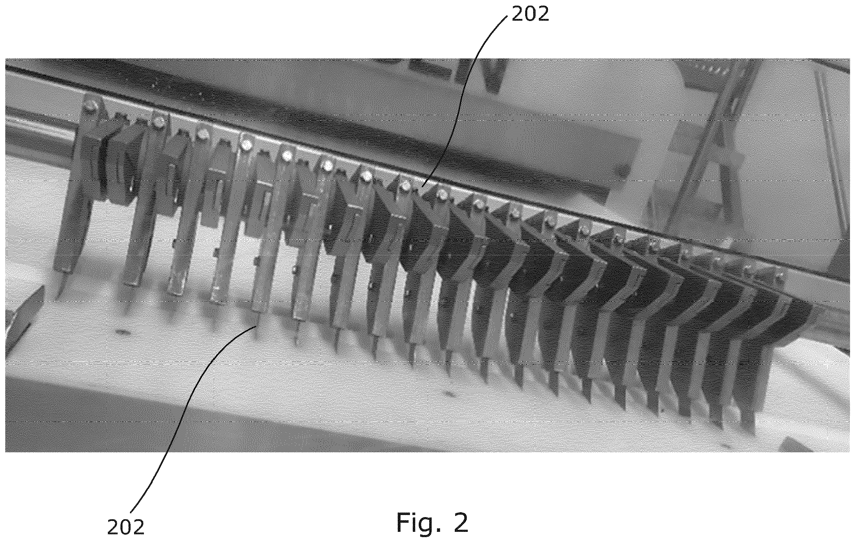

The chocolate sheet was formed into ropes by running it on the belt system through the path of a row of static knives 201. Figure 2 shows the static knives 201, which have sharp knife blades 202 arranged to cut the chocolate sheet into ropes as it travels past.

### Snapping of the ropes to form irregularly shaped and/or sized pieces

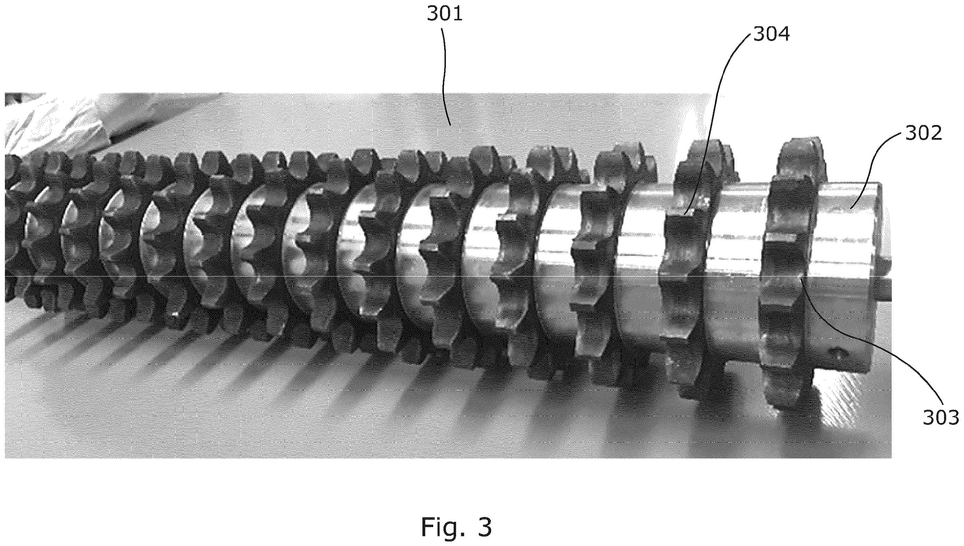

The ropes of chocolate were snapped at multiple locations by application of external pressure at each location by means of the pin roller 301 shown in Figure 3. The pin roller 301 comprises a main cylindrical shaft 302, about which are located a series of annular rings 303 comprising individual rounded pyramidal protrusions 304.

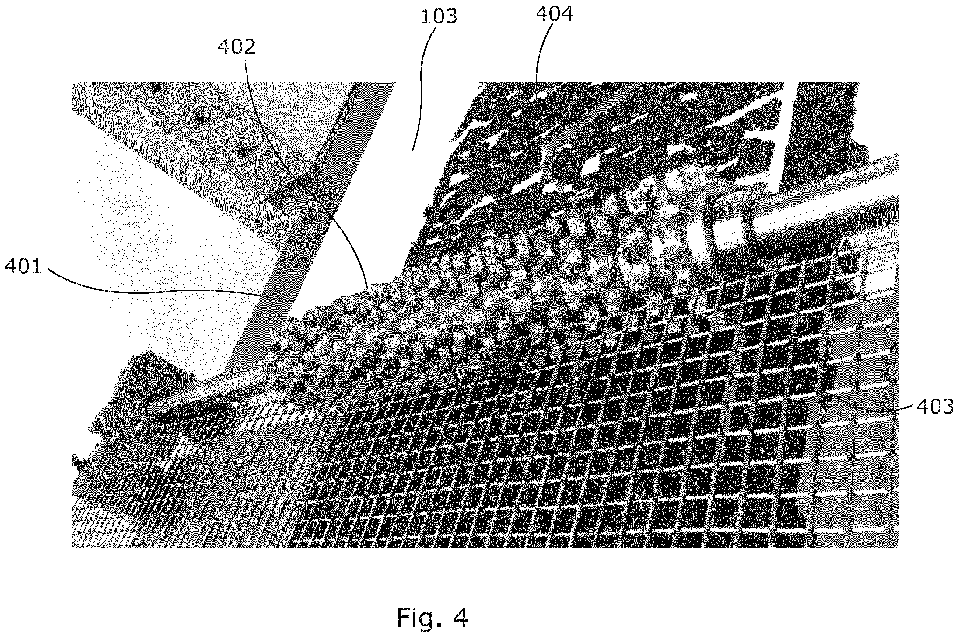

As shown in Figure 4, ropes 403 of chocolate moved past the pin roller 401 on the belt 103 of the belt system, and as the pin roller 401 rotated, the protrusions 402 came into contact with the chocolate ropes 403 and applied pressure to them in order to snap them at the location(s) of contact, thus snapping the chocolate ropes 403 into individual irregularly sized and/or shaped pieces of chocolate 404.

### Removal of small bits/dust/debris

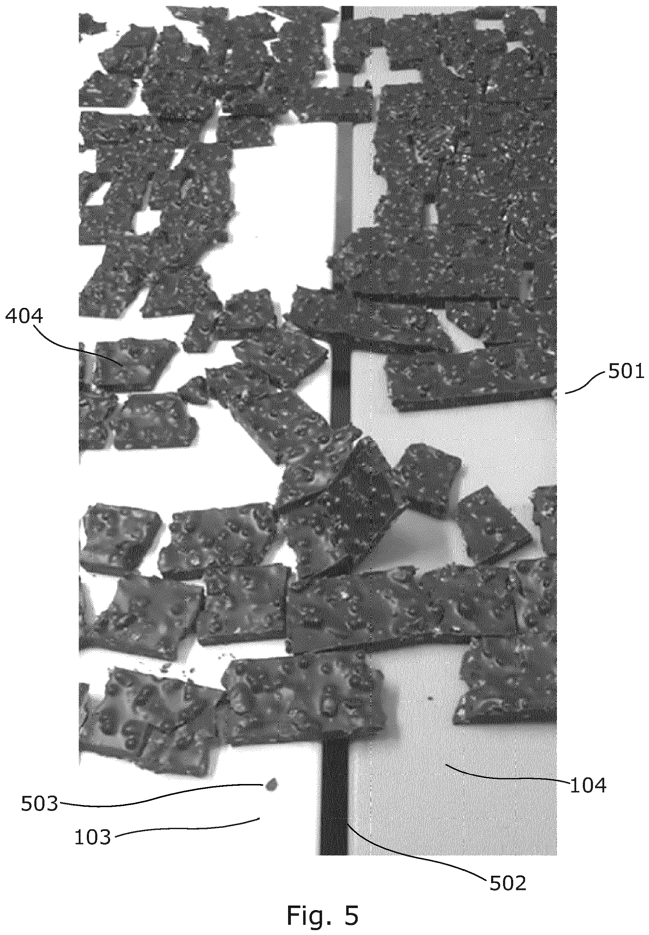

As shown in Figure 5, the irregularly sized and/or shaped pieces of chocolate 404 were transported over a gap 502 between two belts 103 and 104 of the belt system in order to remove any small bits/dust/debris 503.

### Example 1

The initial chocolate composition had a total inclusion level of 30 % w/w, comprising salted caramel (11.5% w/w), chopped almond (11.5% w/w) and crisp rice (7% w/w).

The inclusions were added at a temperature of ~22-23 °C.

The chocolate composition was deposited at a temperature of ~30-31 °C and transported through a ~20 °C cooling tunnel so that it exited the cooling tunnel at a temperature of ~25-26 °C, prior to rope formation.

The cooled, solid chocolate sheet had a thickness of ~7-8 mm with a very bumpy surface.

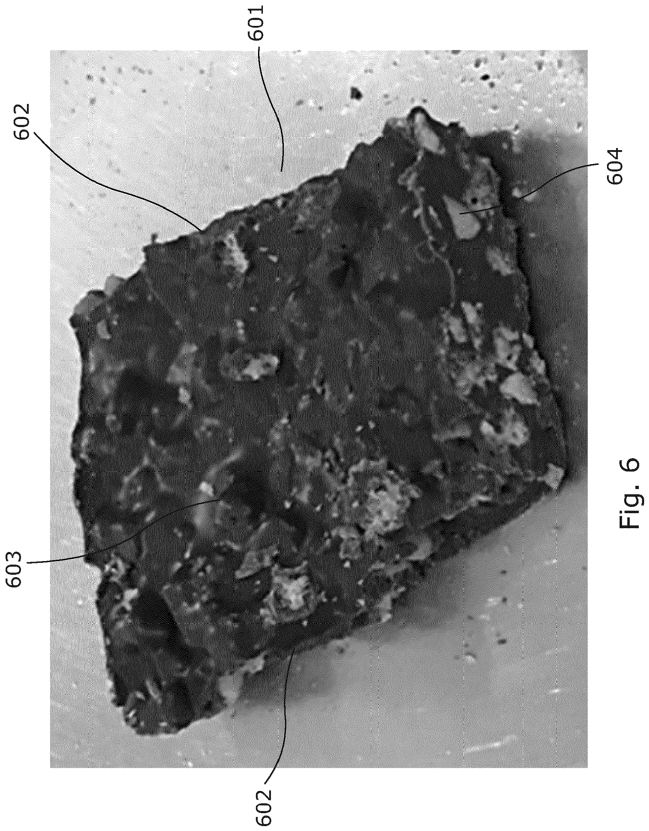

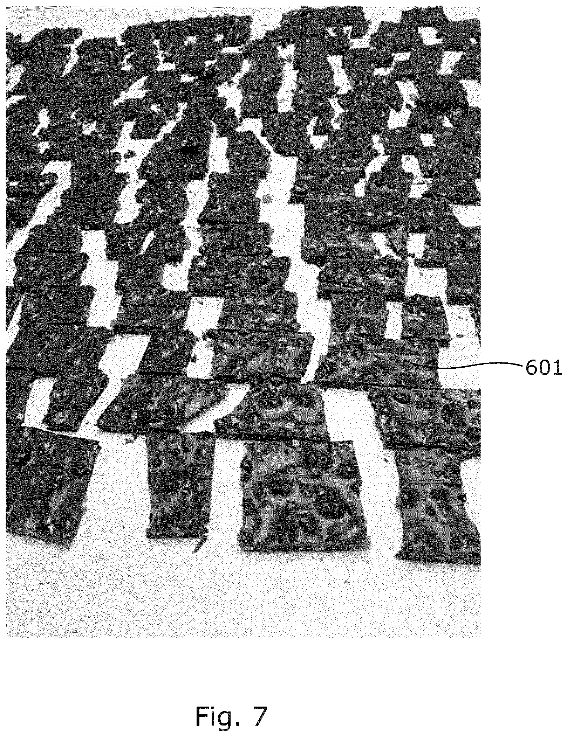

As can be seen in Figure 7, the obtained chocolate pieces 601 had irregular shape and size. As can be seen in Figures 6 and 7, the pieces 601 had visible inclusions 604, a rough/bumpy surface 603, and irregular snapped edges 602.

Figure 7 shows the pieces before they were transported over the belt system gap arrangement shown in Figure 5, and so there is still small bits/dust/debris present.

### Example 2

The initial chocolate composition had a total inclusion level of 25 % w/w, comprising chopped hazelnut (10% w/w), crushed corn (10% w/w) and crisp rice (5% w/w).

The inclusions were added at a temperature of -23.5-24 °C.

The chocolate composition was deposited at a temperature of ~30 °C and transported through a ~20 °C cooling tunnel so that it exited the cooling tunnel at a temperature of -25-26 °C, prior to rope formation.

The chocolate sheet had a thickness of ~8-9 mm, with parts up to 10-13 mm, and a bumpy surface.

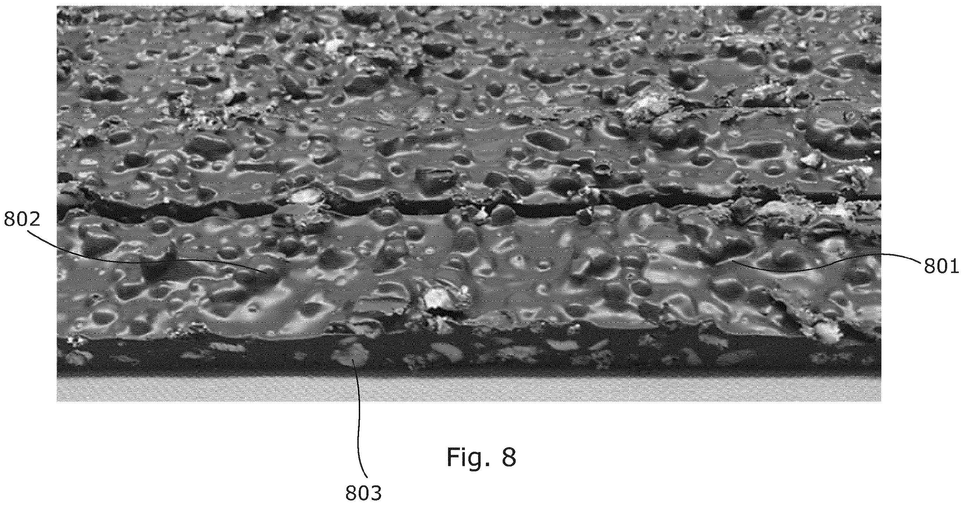

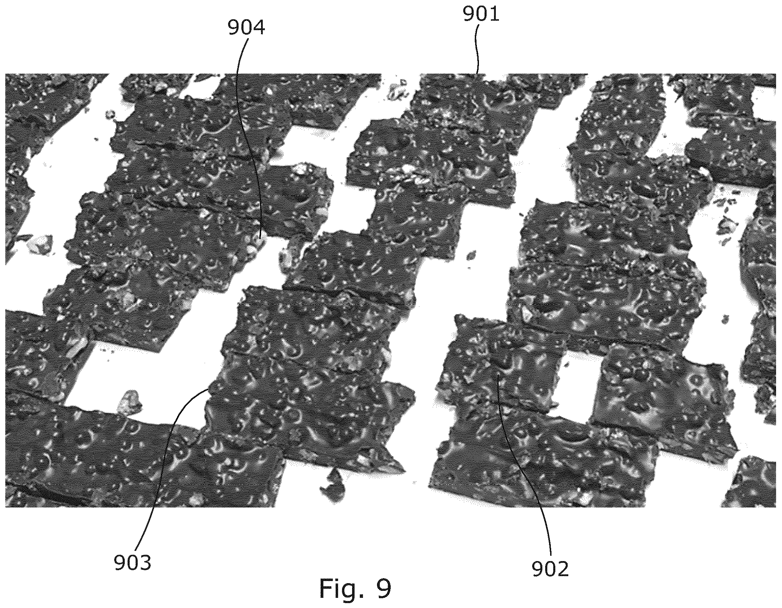

As can be seen in Figure 8, the ropes 801 had visible inclusions 803 and a bumpy surface 802. As can be seen in Figure 9, the obtained pieces 901 had visible inclusions 904 and a rough/bumpy surface 903. Figure 9 also shows the irregular shape/size and irregular snapped edges 903 of the pieces 901.

Figure 9 shows the pieces before they were transported over the belt system gap arrangement shown in Figure 5, and so there is still small bits/dust/debris present.

### Example 3

The initial chocolate composition had a total inclusion level of 25 % w/w, comprising chopped almond (12% w/w) and apricot (13% w/w).

The inclusions were added at a temperature of ~20 °C.

The chocolate composition was deposited at a temperature of ~30 °C and transported through a ~20 °C cooling tunnel so that it exited the cooling tunnel at a temperature of ~23.5-24 °C, prior to rope formation.

The chocolate sheet had an uneven/bumpy surface.

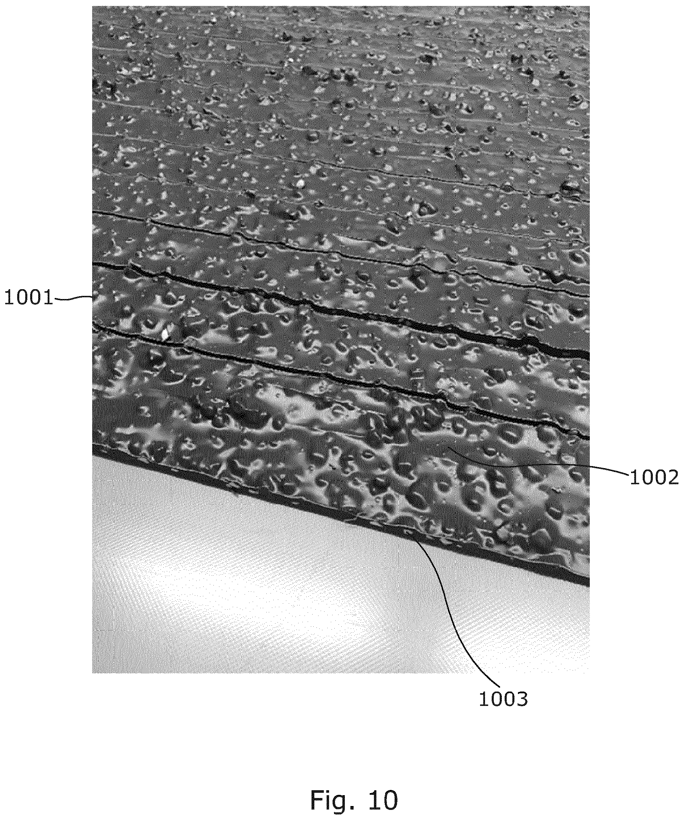

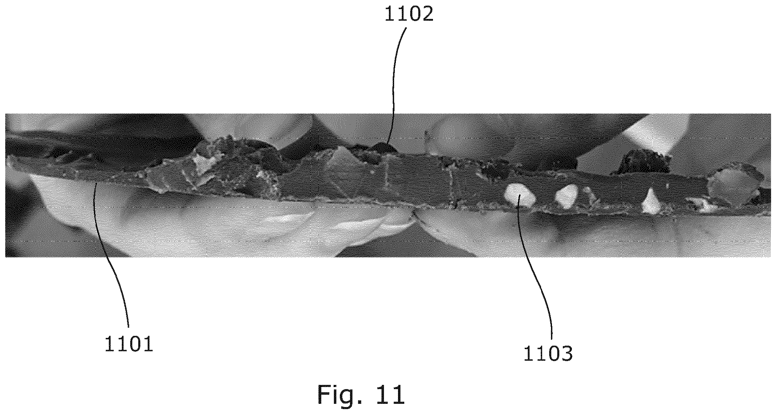

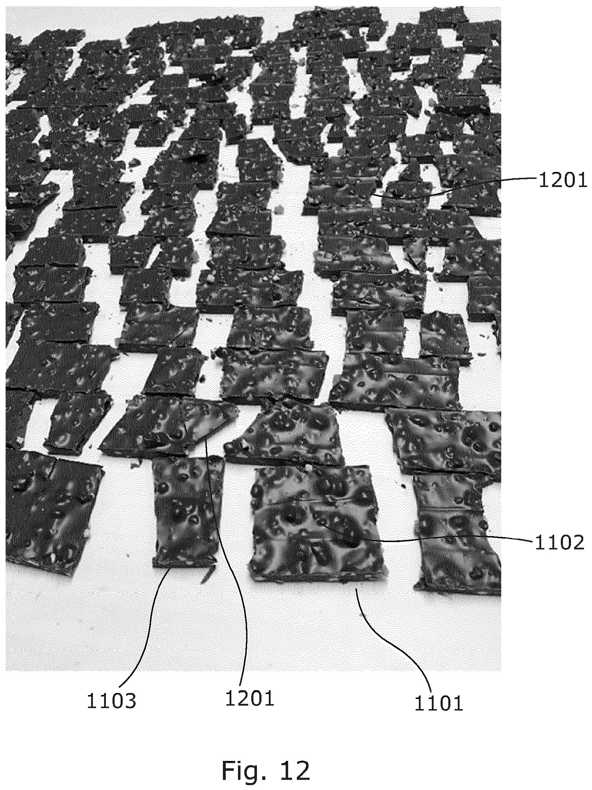

As can be seen in Figure 10, the ropes 1001 had visible inclusions 1003 and an uneven/bumpy surface 1002. As can be seen in Figures 11 and 12, the obtained pieces 1101 had visible inclusions 1103 and an uneven/bumpy surface 1102. Figure 12 also shows the irregular shape/size and irregular snapped edges 1201 of the pieces 1101.

Figure 12 shows the pieces before they were transported over the belt system gap arrangement shown in Figure 5, and so there is still small bits/dust/debris present.

### Alternative arrangement for snapping the ropes - "step down" system

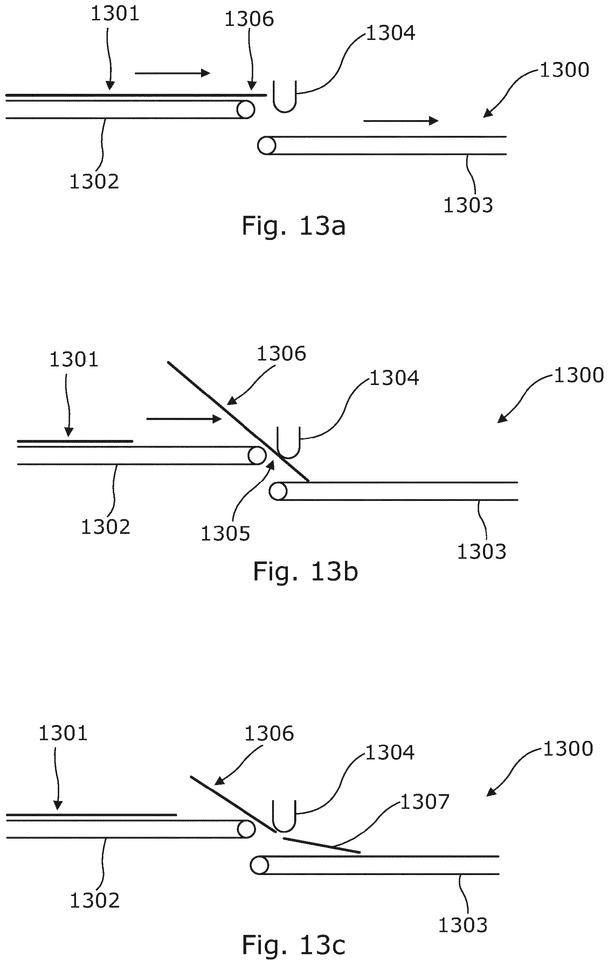

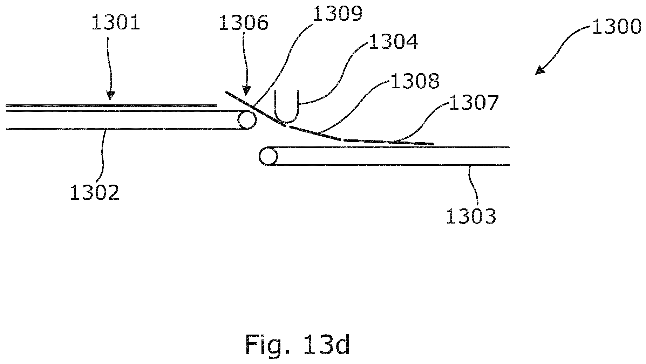

Figures 13a-d illustrate an alternative arrangement 1300 for snapping ropes of confectionery material comprising a "step down" transport system in the form of a belt system. The "step down" transport system comprises a first belt 1302 and a second belt 1303. The belts operate such that the first belt 1302 is upstream of the second belt 1303. The first belt 1302 is positioned higher than the second belt 1303. The arrangement 1300 further comprises a pin roller (not shown) positioned just downstream of the first belt 1302, which comprises protrusions 1304 (one of which is shown at a time in Figures 13-16) which extend to below the level of the surface of the first belt 1302 when at their lowest point.

As can be seen in Figure 13a, a rope of confectionery material 1301 is transported on the first belt 1302 of the transport system. The rope 1301 is transported such that a portion 1305 runs off the edge of the first belt 1301 such that it is no longer supported by the first belt 1302, but is suspended in the air.

As can be seen in Figure 13b, as the rope 1301 is transported along the first belt 1302, the unsupported portion 1305 of the rope 1301 comes into contact with a pin roller protrusion 1304, and the pin roller protrusion 1304 applies external pressure to the unsupported portion 1305 such that the unsupported portion 1305 is forced downwards by the protrusion 1304, and the rope 1301 is bent and snaps upstream of the pin roller, thus forming a snapped portion 1306.

As can be seen in Figures 13c and 13d, as the snapped portion 1306 continues to move along the first and second belts 1302, 1303, it is snapped at multiple points along its length by protrusions 1304 of the pin roller such that multiple irregularly sized and/or shaped confectionery pieces 1307, 1308, 1309 are formed from the snapped portion 1306. The process can then be repeated on the next portion of the rope 1301 after it runs off the edge off the first belt 1302.

If the pieces produced by the arrangement 1300 are too long, they may be subsequently snapped downstream by any of the methods described herein.

### Pin Roller Debris Removal System

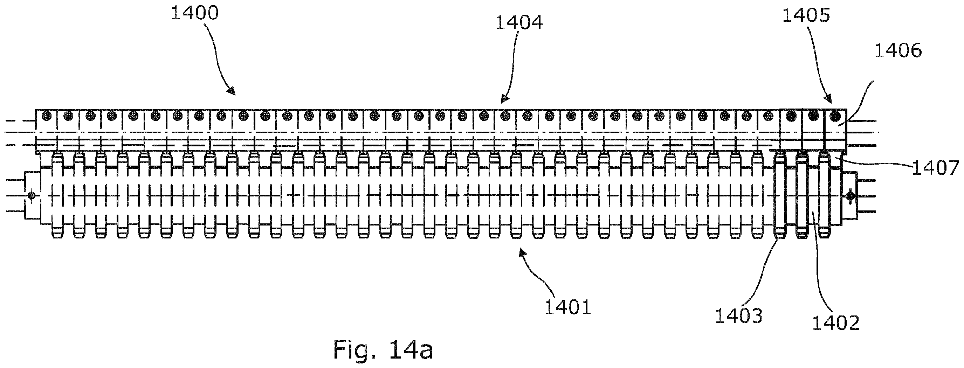

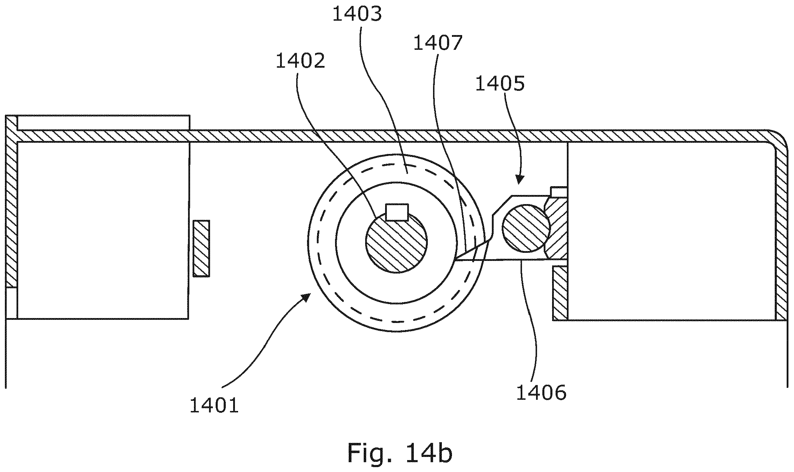

Figures 14a-b illustrate an embodiment of a pin roller debris removal system in the form of a pin roller scraping system 1400. Figure 14a shows an aerial view and Figure 14b shows a cross-sectional view. The scraping system 1400 comprises a pin roller 1401 comprising a central cylindrical shaft 1402 about which are located a series of annular rings 1403 of individual protrusions (not shown). Located downstream of pin roller 1401 is a scraping arrangement 1404 comprising a series of scraping members 1405. The scraping members 1405 comprise a body 1406 and a flange 1407.

As can be seen from Figures 14a and 14b, the body 1406 of each scraping member 1405 is arranged to be in close proximity with the tip of the protrusions (not shown) arranged around the annular rings 1403 of the pin roller 1401, and the flange 1407 of each scraping member 1405 is arranged to fit snugly into the space formed between the protrusions and central cylindrical shaft 1402 of the pin roller 1401, such that the sides of each flange 1407 are in close proximity with the sides of the protrusions, and the distal end of each flange 1407 is in close proximity with the central cylindrical shaft 1402.

In this way, as the pin roller 1401 rotates and the protrusions of the pin roller 1401 apply pressure to at least one rope of confectionery material in order to snap said ropes, any debris and/or pieces of confectionery material that become stuck to the ends of and/or between the protrusions of the pin roller 1401 will be carried up (by the rotating pin roller) into the scraping member 1405, wherein any pieces which are big enough (this depends on the gap left between the parts of the scraping member 1405 and the parts of the pin roller 1401) will come into contact with the scraping member 1405, which substantially blocks the debris and/or pieces from travelling any further upwards on the pin roller 1401 and "scrapes" the debris or pieces off the pin roller 1401.

Therefore, the scraping member 1405 is able to keep the pin roller 1401 substantially free of any substantial pieces of confectionery material which may become stuck to it, and to remove at least a portion of any smaller parts/debris of confectionery material which may become stuck to it.

The above embodiments are described by way of example only. Many variations are possible without departing from the scope of the invention as defined in the appended claims.

## Claims

1. A method of manufacturing a plurality of irregularly shaped and/or sized pieces of confectionery material (404) comprising the steps of:
a) forming at least one rope (403) of confectionery material;
b) applying external pressure at multiple locations along the length of the at least one rope to snap the at least one rope at multiple locations;
wherein step b) comprises applying the external pressure by means of at least one pin roller (301).

2. A method as claimed in claim 1, wherein the confectionery material is selected from chocolate and candy.

3. A method as claimed in claim 1 or 2, wherein the confectionery material comprises at least one inclusion (604) selected from the group consisting of; whole nuts, chopped nuts, crushed nuts, raisins, cranberry, cherry, popcorn, candy pieces, chocolate pieces, biscuit pieces, cake pieces, corn, crushed corn, caramel, salted caramel, crisp rice, apricot and dried fruit, or any combination thereof.

4. A method as claimed in any preceding claim, wherein the pieces comprise visible inclusions.

5. A method as claimed in any preceding claim, wherein step a) comprises the step of depositing the confectionery material onto a surface, and, optionally, wherein the confectionery material is deposited onto a transport system, such as a belt of a movable belt system (103, 104, 1302, 1303).

6. A method as claimed in any preceding claim, wherein the confectionery material is cooled prior to step a), preferably by transporting the confectionery material through a cooling tunnel on a transport system.

7. A method as claimed in any preceding claim, wherein step a) comprises using a rope former and, optionally, wherein the rope former comprises a plurality of rope-forming channels.

8. A method as claimed in any one of claims 1 to 6, wherein the confectionery material is cut into at least one rope with at least one knife, such as at least one row of static knives (201).

9. A method as claimed in any one of claims 7 or 8 comprising a transport system, wherein the confectionery material is transported through the rope former or through the path of at least one row of knives, such as at least one row of static knives (201).

10. A method as claimed in any preceding claim, wherein step b) comprises applying external mechanical pressure and/or, wherein step b) comprises applying external pressure by means of at least one piston or press.

11. A method as claimed in any preceding claim, wherein the at least one pin roller comprises a shaft (302) about the circumference of which is located at least one set of at least one protrusion (304), and, optionally, the method further comprises the formation of more than one rope, wherein a set of at least one protrusion is aligned with each rope, and/or, optionally, wherein step b) further comprises at least partially removing debris and/or pieces of confectionery material which become stuck to at the least one pin roller.

12. A method as claimed in any one of claims 10 or 11, wherein the rope contact surface of the or each protrusion, piston or press extends across at least 25% of the width of the or each rope and, optionally, wherein the rope contact surface of the or each protrusion, piston or press extends across at least 50% of the width of the or each rope and/or wherein the rope contact surface of the or each piston, press or protrusion contacts at least 5 mm of the length of the or each rope and/or the method further comprises a transport system, wherein the or each rope is transported through the path of the at least one piston, press or pin roller by means of the transport system.

13. A method as claimed in any preceding claim, wherein the confectionery material is cooled before step a), and the or each rope formed in step a) is cooled prior to step b) and/or wherein step b) comprises applying external pressure at multiple locations along the length of at least one rope to snap the at least one rope at each location and/or applying external pressure at multiple locations along the length of the at least one rope to snap the at least one rope at a location upstream or downstream of the location at which pressure is applied.

14. An apparatus suitable for manufacturing a plurality of irregularly shaped and/or sized pieces of confectionery material (404) comprising;
a device for forming at least one rope (403) of confectionery material;
a device for applying external pressure to multiple locations along the length of the at least one rope to snap the at least one rope at multiple locations,
wherein the device or mechanism for applying external pressure comprises a pin roller (301).

15. Use of a pin roller (301) to snap a rope (403) of confectionery material into irregularly shaped and/or sized pieces (404).

## Patentansprüche

1. Verfahren zum Herstellen einer Vielzahl von unregelmäßig geformten und/oder bemessenen Stücken aus Süßwarenmaterial (404), umfassend die Schritte:
a) Ausbilden mindestens eines Strangs (403) aus Süßwarenmaterial;
b) Ausüben von Außendruck an mehreren Stellen entlang der Länge des mindestens einen Strangs, um den mindestens einen Strang an mehreren Stellen abzubrechen,
wobei Schritt b) das Ausüben des Außendrucks mittels mindestens einer Stiftwalze (301) umfasst.

2. Verfahren nach Anspruch 1, wobei das Süßwarenmaterial aus Schokolade und Bonbons ausgewählt ist.

3. Verfahren nach Anspruch 1 oder 2, wobei das Süßwarenmaterial mindestens einen Einschluss (604) umfasst, der ausgewählt ist aus der Gruppe bestehend aus; ganzen Nüssen, gehackten Nüssen, zerkleinerten Nüssen, Rosinen, Preiselbeere, Kirsche, Popcorn, Bonbonstücken, Schokoladenstücken, Keksstücken, Kuchenstücken, Mais, zerkleinertem Mais, Karamell, gesalzenem Karamell, Puffreis, Aprikose und Trockenfrüchten oder einer beliebigen Kombination davon.

4. Verfahren nach einem der vorstehenden Ansprüche, wobei die Stücke sichtbare Einschlüsse umfassen.

5. Verfahren nach einem der vorstehenden Ansprüche, wobei Schritt a) den Schritt eines Abscheidens des Süßwarenmaterials auf eine Oberfläche umfasst und optional wobei das Süßwarenmaterial auf ein Transportsystem, wie ein Band eines beweglichen Bandsystems (103, 104, 1302, 1303), abgeschieden wird.

6. Verfahren nach einem der vorstehenden Ansprüche, wobei das Süßwarenmaterial vor Schritt a) gekühlt wird, vorzugsweise durch Transportieren des Süßwarenmaterials durch einen Kühltunnel auf einem Transportsystem.

7. Verfahren nach einem der vorstehenden Ansprüche, wobei Schritt a) ein Verwenden eines Strangformers umfasst und optional wobei der Strangformer eine Vielzahl von Strangformungskanälen umfasst.

8. Verfahren nach einem der Ansprüche 1 bis 6, wobei das Süßwarenmaterial mit mindestens einem Messer, wie mindestens einer Reihe statischer Messer (201), in mindestens einen Strang geschnitten wird.

9. Verfahren nach einem der Ansprüche 7 oder 8, umfassend ein Transportsystem, wobei das Süßwarenmaterial durch den Strangformer oder durch den Weg mindestens einer Reihe von Messern, wie mindestens eine Reihe statischer Messer (201), transportiert wird.

10. Verfahren nach einem der vorstehenden Ansprüche, wobei Schritt b) das Ausüben von externem mechanischem Druck umfasst und/oder wobei Schritt b) das Ausüben von externem Druck mittels mindestens eines Kolbens oder einer Presse umfasst.

11. Verfahren nach einem der vorstehenden Ansprüche, wobei die mindestens eine Stiftwalze eine Welle (302), um deren Umfang sich mindestens ein Satz von mindestens einem Vorsprung (304) befindet, umfasst, und optional wobei das Verfahren ferner die Formung von mehr als einem Strang umfasst, wobei ein Satz von mindestens einem Vorsprung an jedem Strang ausgerichtet ist und/oder optional wobei Schritt b) ferner mindestens teilweises Entfernen von Schmutz und/oder Stücken von Süßwarenmaterial umfasst, die an der mindestens einen Stiftwalze haften bleiben.

12. Verfahren nach einem der Ansprüche 10 oder 11, wobei sich die Strangkontaktoberfläche des oder jedes Vorsprungs, Kolbens oder der oder jeder Presse über mindestens 25 % der Breite des oder jedes Strangs erstreckt und optional wobei sich die Strangkontaktoberfläche des oder jedes Vorsprungs, des Kolbens oder der oder jeder Presse über mindestens 50 % der Breite des oder jedes Strangs erstreckt und/oder wobei die Strangkontaktoberfläche des oder jedes Kolbens, der oder jeder Presse oder des Vorsprungs mindestens 5 mm der Länge des oder jedes Strangs berührt und/oder das Verfahren ferner ein Transportsystem umfasst, wobei der oder jeder Strang durch den Weg des mindestens einen Kolbens, der Presse oder der Stiftwalze mittels des Transportsystems transportiert wird.

13. Verfahren nach einem der vorstehenden Ansprüche, wobei das Süßwarenmaterial vor Schritt a) gekühlt wird und der oder jeder in Schritt a) geformte Strang vor Schritt b) gekühlt wird und/oder wobei Schritt b) das Ausüben von Außendruck an mehreren Stellen entlang der Länge mindestens eines Strangs, um den mindestens einen Strang an jeder Stelle abzubrechen und/oder das Ausüben von Außendruck an mehreren Stellen entlang der Länge des mindestens einen Strangs umfasst, um den mindestens einen Strang an einer Stelle stromaufwärts oder stromabwärts der Stelle, an der Druck ausgeübt wird, abzubrechen.

14. Einrichtung, die zum Herstellen einer Vielzahl von unregelmäßig geformten und/oder bemessenen Stücken aus Süßwarenmaterial (404) geeignet ist;
eine Vorrichtung zum Formen mindestens eines Strangs (403) aus Süßwarenmaterial;
eine Vorrichtung zum Ausüben von Außendruck auf mehrere Stellen entlang der Länge des mindestens einen Strangs, um den mindestens einen Strang an mehreren Stellen abzubrechen,
wobei die Vorrichtung oder der Mechanismus zum Ausüben von Außendruck eine Stiftwalze (301) umfasst.

15. Verwenden einer Stiftwalze (301), um einen Strang (403) aus Süßwarenmaterial in unregelmäßig geformte und/oder bemessene Stücke (404) abzubrechen.

## Revendications

1. Procédé de fabrication d'une pluralité morceaux de matériau de confiserie (404) de forme et/ou de taille irrégulière comprenant les étapes consistant à :
a) former au moins un cordon (403) de matériau de confiserie ;
b) appliquer une pression externe au niveau de multiples localisations sur la longueur de l'au moins un cordon pour casser l'au moins un cordon au niveau de multiples localisations ;
dans lequel l'étape b) comprend l'application de la pression externe au moyen d'au moins un rouleau à picots (301).

2. Procédé selon la revendication 1, dans lequel le matériau de confiserie est choisi parmi chocolat et bonbon.

3. Procédé selon la revendication 1 ou 2, dans lequel le matériau de confiserie comprend au moins une inclusion (604) choisie dans le groupe constitué par ; noix entières, noix hachées, noix concassées, raisins secs, canneberge, cerise, pop-corn, morceaux de bonbons, morceaux de chocolat, morceaux de biscuits, morceaux de gâteau, maïs, maïs concassé, caramel, caramel salé, riz croustillant, abricot et fruits secs, ou n'importe quelle combinaison de ceux-ci.

4. Procédé selon l'une quelconque revendication précédente, dans lequel les morceaux comprennent des inclusions visibles.

5. Procédé selon l'une quelconque revendication précédente, dans lequel l'étape a) comprend l'étape de dépôt du matériau de confiserie sur une surface, et, facultativement, dans lequel le matériau de confiserie est déposé sur un système de transport, tel qu'une courroie d'un système de courroie mobile (103, 104, 1302, 1303).

6. Procédé selon l'une quelconque revendication précédente, dans lequel le matériau de confiserie est refroidi avant l'étape a), de préférence en transportant le matériau de confiserie à travers un tunnel de refroidissement sur un système de transport.

7. Procédé selon l'une quelconque revendication précédente, dans lequel l'étape a) comprend l'utilisation d'un formeur de cordon et, facultativement, dans lequel le formeur de cordon comprend une pluralité de canaux de formation de cordon.

8. Procédé selon l'une quelconque des revendications 1 à 6, dans lequel le matériau de confiserie est découpé en au moins un cordon avec au moins un couteau, tel qu'au moins une rangée de couteaux statiques (201).

9. Procédé selon l'une quelconque des revendications 7 ou 8 comprenant un système de transport, dans lequel le matériau de confiserie est transporté à travers le formeur de cordon ou à travers la trajectoire d'au moins une rangée de couteaux, telle qu'au moins une rangée de couteaux statiques (201).

10. Procédé selon l'une quelconque revendication précédente, dans lequel l'étape b) comprend l'application de pression mécanique externe et/ou, dans lequel l'étape b) comprend l'application de pression externe au moyen d'au moins un piston ou presse.

11. Procédé selon l'une quelconque revendication précédente, dans lequel l'au moins un rouleau à picots comprend un arbre (302) autour de la circonférence duquel est localisé au moins un ensemble d'au moins une protubérance (304), et, facultativement, le procédé comprend en outre la formation de plus d'un cordon, dans lequel un ensemble d'au moins une protubérance est aligné avec chaque cordon, et/ou, facultativement, dans lequel l'étape b) comprend en outre l'élimination au moins partielle de débris et/ou morceaux de matériau de confiserie qui se collent à l'au moins un rouleau à picots.

12. Procédé selon l'une quelconque des revendications 10 ou 11, dans lequel la surface de contact de cordon du ou de chaque protubérance, piston ou presse s'étend à travers au moins 25 % de la largeur du ou de chaque cordon et, facultativement, dans lequel la surface de contact de cordon du ou de chaque protubérance, piston ou presse s'étend à travers au moins 50 % de la largeur du ou de chaque cordon et/ou dans lequel la surface de contact de cordon du ou de chaque piston, presse ou protubérance vient en contact avec au moins 5 mm de la longueur du ou de chaque cordon et/ou le procédé comprend en outre un système de transport, dans lequel le ou chaque cordon est transporté à travers la trajectoire de l'au moins un piston, presse ou rouleau à picots au moyen du système de transport.

13. Procédé selon l'une quelconque revendication précédente, dans lequel le matériau de confiserie est refroidi avant l'étape a), et le ou chaque cordon formé à l'étape a) est refroidi avant l'étape b) et/ou dans lequel l'étape b) comprend l'application de pression externe au niveau de multiples localisations sur la longueur d'au moins un cordon pour casser l'au moins un cordon au niveau de chaque localisation et/ou l'application de pression externe au niveau de multiples localisations sur la longueur de l'au moins un cordon pour casser l'au moins un cordon au niveau d'une localisation en amont ou en aval de la localisation au niveau de laquelle la pression est appliquée.

14. Appareil approprié pour la fabrication d'une pluralité de morceaux de matériau de confiserie (404) de forme et/ou de taille irrégulière comprenant ;
un dispositif permettant de former au moins un cordon (403) de matériau de confiserie ;
un dispositif permettant d'appliquer une pression externe à de multiples localisations sur la longueur de l'au moins un cordon pour casser l'au moins un cordon au niveau de multiples localisations,
dans lequel le dispositif ou mécanisme permettant d'appliquer une pression externe comprend un rouleau à picots (301).

15. Utilisation d'un rouleau à picots (301) pour casser un cordon (403) de matériau de confiserie en morceaux (404) de forme et/ou de taille irrégulière.
